# EUROPEAN PATENT APPLICATION

(11) **EP 3 905 102 A1**
(43) Date of publication of application: **03.11.2021**
(21) Application number: 19903861.3
(22) Date of filing: 13.12.2019
(51) Int. Cl.: G06K 9/00, G06Q 20/40

(54) **METHOD AND DEVICE FOR DETERMINING OPERATION BASED ON FACIAL EXPRESSION GROUPS, AND ELECTRONIC DEVICE**

(30) Priority: 26.12.2018 CN 201811617580
(71) Applicant: Xunteng (Guangdong) Technology Co., Ltd., Guangzhou, Guangdong 510000 (CN)
(72) Inventor: JIAN, Weiming, Guangzhou, Guangdong 510000 (CN); PI, Aiping, Guangzhou, Guangdong 510000 (CN); LIANG, Huagui, Guangzhou, Guangdong 510000 (CN); HUANG, Feiying, Guangzhou, Guangdong 510000 (CN); CHEN, Qiurong, Guangzhou, Guangdong 510000 (CN)
(74) Representative: Schulz Junghans Patentanwälte PartGmbB
(86) International application number: PCT/CN2019/125062
(87) International publication number: WO 2020/135096

(57) **Abstract**

A method and device for determining an operation based on facial expression groups, and an electronic device, related to the technical field of image processing. The method is executed by the electronic device. The method comprises: acquiring a current facial image of a target subject (S102); performing live body facial recognition with respect to the target subject on the basis of the current facial image, determining whether the identity of the target subject is valid on the basis of the recognition result (S104), the live body facial recognition comprising live body recognition and facial recognition; if valid, acquiring a current facial expression group of the current facial image (S106); determining an instruction to be executed corresponding to the current facial expression group (S108); and executing an operation corresponding to said instruction (S110). With the employment of a facial recognition technique, at the same time as an identity authentication function of facial recognition is extended, added with user-defined facial expressions and actions, it is ensured that these actions would not be presented when the user is in a nonconscious state such as working, sleeping or unconscious, thus safeguarding the security of using the face of the user, and enhancing the security and reliability of the electronic device in determining an operation.

## Description

### Cross-references to Related Applications

This application claims priority of Chinese Patent Application No. CN201811617580.3, titled "An Operation Determination Method Based on Expression Groups, Apparatus and Electronic Device Therefor", filed with the Chinese Patent Office on 26 December 2018, the entire content of which is incorporated by reference in this application.

### Technical Field

This application relates to the field of image processing technology, in particular to an operation determination method based on expression groups, apparatus and electronic device therefor.

### Technical Background

With the development of science and technology, electronic devices may provide many service applications that meet the needs of users, such as mobile phone transfers and bank ATM machines that may provide users with services such as transfers and cash deposits and withdrawals according to user instructions. Generally, mobile phone transfers or bank ATM machines determine the legitimacy of the user's identity according to the user ID and the password entered by the user, and then follow various instructions issued by the user to perform operations corresponding to the instructions. In the prior art, in order to ensure the safety and reliability of operation execution, it is mostly necessary to confirm the user's identity and ensure that the user is a legitimate user before performing the operation corresponding to the instruction. However, the existing operation determination method is very simple. Most of them only use digital/text passwords, passphrases, fingerprints or human faces to determine the user's identity, and then execute the operation corresponding to the instruction issued by the user. However, the security and reliability of these simple uses of passwords or passphrases are still low, and they are easily stolen by criminals, while fingerprints or human faces are easy to be copied and hacked, making an electronic device directly execute the operation corresponding to the instruction issued by criminals, thereby bringing certain losses to legitimate users.

### Summary of the invention

In view of this, the purpose of this application is to provide an operation determination method, apparatus, and electronic device based on human face identification and expression groups, which may effectively improve the safety and reliability of the determination operation of electronic devices.

In order to achieve the foregoing objectives, the technical solutions adopted in the embodiments of the present application are as follows:
In a first aspect, the present application provides an operation determination method based on expression groups, the method comprising: obtaining a current human face image of a target object; performing a live body human face identification on the target object based on the current human face image, determining whether an identity of the target object is legal according to an identification result; the live body human face identification comprises a live body identification and a human face identification; if legal, obtaining a current expression group of the current human face image; determining an instruction to be executed corresponding to the current expression group; performing an operation corresponding to the instruction to be executed.

In combination with the first aspect, the embodiments of the present application provide a first possible implementation method of the first aspect, wherein the step of performing the live body human face identification on the target object based on the current human face image comprises: performing the live body identification on the current human face image, and determining whether current human face image information is directly from a real live body; when the current human face image information directly comes from a real live body, performing the human face identification on the current human face image, and determining whether the current human face image matches each pre-stored human face image in a pre-stored human face image list; if yes, confirming that the identity of the target object is legal.

In combination with the first possible implementation method of the first aspect, the embodiments of the present application provide a second possible implementation method of the first aspect, wherein the step of obtaining the current expression group of the current human face image comprises: determining the current expression group of the current human face image based on the current human face image and the pre-stored human face image list.

In combination with the second possible implementation method of the first aspect, the embodiments of the present application provide a third possible implementation method of the first aspect, wherein the step of determining the current expression group of the current human face image based on the current human face image and the pre-stored human face image list comprises: obtaining a first expression feature model corresponding to the current human face image; and obtaining a second expression feature model corresponding to each pre-stored human face image in the pre-stored human face image list; comparing the first expression feature model with each of the second expression feature models to determine a similarity value between the current human face image and each pre-stored face image; determining a target human face image corresponding to the current human face image according to the similarity value; obtaining a user account corresponding to the target human face image; determining the current expression group corresponding to the current human face image according to the user account.

In combination with the third possible implementation method of the first aspect, the embodiments of the present application provide a fourth possible implementation method of the first aspect, wherein the step of obtaining a first expression feature model corresponding to the current human face image; and obtaining a second expression feature model corresponding to each pre-stored human face image in the pre-stored human face image list comprises: determining a first position coordinate set of a plurality of key facial feature points on the current human face image according to the current human face image; using the first position coordinate set as the first expression feature model corresponding to the current human face image; according to each second position coordinate set of a plurality of facial key feature points of each pre-stored human face image in the pre-stored human face image list; each second position coordinate set is used as a second expression feature model corresponding to each pre-stored human face image in the pre-stored face image list.

In combination with the third possible implementation method of the first aspect, the embodiments of the present application provide a fifth possible implementation method of the first aspect, wherein the step of obtaining a first expression feature model corresponding to the current human face image; and obtaining a second expression feature model corresponding to each pre-stored human face image in the pre-stored human face image list further comprises: inputting the current human face image to an expression identification neural network, so that the expression feature identification network determines the first expression feature model corresponding to the current human face image; inputting each human face image in the human face image list to the expression identification neural network, so that the expression identification neural network determines the second expression feature model corresponding to each pre-stored face image in the pre-stored human face image list.

In combination with the third possible implementation method of the first aspect, the embodiments of the present application provide a sixth possible implementation method of the first aspect, wherein the step of determining the current expression group corresponding to the current human face image according to the user account comprises: searching for a plurality of expression groups corresponding to the user account in a pre-established group database; obtaining an expression group corresponding to the current human face image; determining the expression group corresponding to the current human face image as the current expression group.

In combination with the first aspect, the embodiments of the present application provide a seventh possible implementation method of the first aspect, wherein the step of determining an instruction to be executed corresponding to the current expression group comprises: searching for the instruction to be executed corresponding to the current expression group in a pre-established instruction database; wherein a corresponding relationship between the expression group and the instruction to be executed is stored in the instruction database; the instruction to be executed corresponds to at least one expression group.

In combination with the seventh possible implementation method of the first aspect, the embodiments of the present application provide a eighth possible implementation method of the first aspect, wherein the instruction database comprises at least a pass instruction, a payment instruction and/or an alarm instruction; wherein, the alarm instruction comprises at least one type of alarm instruction; each type of the alarm instruction corresponds to one type of alarm mode; different types of alarm instruction correspond to different expression groups; the payment instruction comprises at least one type of payment instruction; each type of payment instruction corresponds to a payment amount; different types of payment instruction correspond to different expression groups.

In combination with the first aspect, the embodiments of the present application provide a ninth possible implementation method of the first aspect, wherein the method further comprises: when a user registers, obtaining an user account of the user, and collecting pre-stored human face images of the user; determining the second facial expression feature model of the pre-stored human face images, storing a corresponding relationship between the user account and the second facial expression feature model; and storing a corresponding relationship between the user account and the pre-stored human face images; determining the expression group of each human face image based on each second expression feature model; storing the corresponding relationship between the expression group set by the user and the instruction to be executed.

In a second aspect, the present application further provides an operation determination apparatus based on expression groups, characterized in that, the apparatus is executed by an electronic device, and the apparatus comprises: a human face image acquisition module configured to obtain a current human face image of a target object; a live body identification module configured to determine whether current human face image information is directly from a real live body; a human face identification module configured to perform a live body human face identification on the target object based on the current human face image, and determine whether an identity of the target object is legal according to an identification result; an expression feature acquisition module configured to obtain a current expression group of the current human face image when the identification result of the human face identification module is that the identity is legal; an instruction determining module configured to determine an instruction to be executed corresponding to the current expression group; an operation execution module configured to perform an operation corresponding to the instruction to be executed.

In a third aspect, the present application provides an electronic device, comprising an image acquisition device, a processor, and a storage device; the image acquisition device is configured to acquire image information; a computer program is stored on the storage device, and the computer program executes a method such as the method of any one of the first aspect to the ninth possible implementation method of the first aspect.

In a fourth aspect, the present application provides a chip with a program stored on the chip, wherein the program executes the steps of the method of any one of the first aspect to the ninth possible implementation method of the first aspect when the program is run by a processor.

The embodiments of the application provide an operation determination method based on expression groups, apparatus and electronic device therefor, which may obtain a human face image of a target object, and perform live body human face identification on the target object based on the human face image, thereby determining whether the identity of the target object is legal. If legal, the instruction to be executed corresponding to the obtained current expression feature of the target object is determined, and then the operation corresponding to the instruction to be executed is performed. This method of determining instructions to be executed based on expression groups and executing corresponding operations is more secure and reliable than simple verification methods such as passwords and passphrases used in the prior art, and may effectively prevent criminals from stealing passwords and causing economic losses to legitimate users. In addition, using human face identification technology, while continuing the identity authentication function of human face identification, with addition of user-defined facial expressions, may ensure that a user will not display these actions in unconscious states such as work, sleep or coma etc., which greatly protects the safety of the user's face.

Other features and advantages of the present disclosure will be described in the following specification, or some of the features and advantages may be inferred from the specification or determined without doubt, or may be learned by implementing the above-mentioned technology of the present disclosure.

In order to make the above-mentioned objectives, features and advantages of the present application more obvious and understandable, the preferred embodiments and accompanying figures are described in detail as follows.

### Description of the drawings

In order to more clearly illustrate the specific embodiments of the application or the technical solutions in the prior art, the following will briefly introduce the figures that need to be used in the description of the specific embodiments or the prior art. Obviously, the figures in the following description are some embodiments of the present application. For those of ordinary skill in the art, other figures may be obtained based on these figures without any inventive work.
Figure 1 shows a flowchart of an operation determination method based on expression groups provided by an embodiment of the present application;
Figure 2 shows a flowchart of another operation determination method based on expression groups provided by an embodiment of the present application;
Figure 3 shows an illustrative structural diagram of a terminal device provided by an embodiment of the present application;
Figure 4 shows an illustrative structural diagram of an operation apparatus based on expression groups provided by an embodiment of the present application;
Figure 5 shows an illustrative structural diagram of another operation apparatus based on expression groups provided by an embodiment of the present application;
Figure 6 shows an illustrative structural diagram of another operation apparatus based on expression groups provided by an embodiment of the present application;
Figure 7 shows an illustrative structural diagram of another operation determining apparatus based on expression groups provided by an embodiment of the present application;
Figure 8 shows an illustrative structural diagram of an electronic device provided by an embodiment of the present application.

### Description

In order to make the purpose, technical solutions and advantages of the embodiments of this application clearer, the technical solutions of this application will be described clearly and completely in conjunction with the accompanying figures. Obviously, the described embodiments are part of the embodiments of this application, not all of the embodiments. Based on the embodiments in this application, all other embodiments obtained by those of ordinary skill in the art without inventive work shall fall within the protection scope of this application.

The current human face payment technology uses human face identification as a means of payment. Therefore, it is possible to pretend to be the user's identity through photos and videos to conduct payment transfers or some kind of authentication behavior, which harms the interests of users. In addition, since the correct human face posture is used as a means of payment, it is easy for users to unknowingly use the stolen facial information for payment transfer or certain authentication behaviors, which greatly harms the interests of users. Therefore, considering that the safety and reliability of the instruction operation determination method of the existing electronic equipment is low, it is easy to be used by criminals. In order to improve this problem, the embodiment of the present application provides a method, apparatus, and electronic device for operation determination based on expression groups, which may confirm that the user is a real person and confirm different operation instructions pre-set by the user through different expressions of the user. In turn, the safety and reliability of determination operations of electronic device are greatly improved. In addition, due to the use of live body face technology, the user must operate in person in order to pass the authentication, which greatly protects the interests of the user. Moreover, since a specified instruction action may be completed only by making expressions, and the user usually rarely shows these expressions during work, entertainment, sleeping, coma, drunkenness, daily life or without their knowledge, it may therefore effectively prevent the fraudulent use of human face information. The following describes the embodiments of the present application in detail.

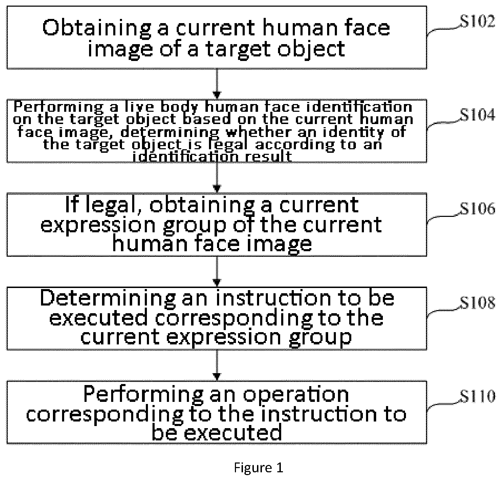

Referring to the flowchart of an operation determination method based on expression groups shown in Figure 1, the method may be executed by an electronic device, where the electronic device may be a camera, a live body human face camera, a bank ATM machine, a self-service terminal, a USB key with camera, a bank USB key with camera, a tax control panel with camera, a mobile phone, a smart TV, a personal computer, a notebook computer, a tablet computer, a personal computer with camera device, an industrial computer with camera device, a PDA, a handheld device, a smart watch, a smart glasses, a smart POS machine, a smart scanner, a smart robot, a smart car, a smart home, a smart payment terminal, a smart TV with camera etc. The method comprises the following steps:
Step S102: obtaining a current human face image of a target object.

Specifically, the human face image of the target object is collected by an image acquisition device, wherein the image acquisition equipment comprises camera device such as a camera and a live body human face camera, as well as device with cameras such as a mobile phone, a USB key with camera, and a tax control panel with camera.

Step S104: performing a live body human face identification on the target object based on the current human face image, determining whether an identity of the target object is legal according to an identification result.

In order to determine whether the identity of the target object is legal, it is necessary to perform live body human face identification on the current human face image. By combining the live body identification and human face identification, the accuracy and security of determining whether the identity is legal is further improved. In specific applications, firstly, live body identification is used to determine whether the current human face image is directly from a real live body, and then human face identification technology is used to perform human face identification on the collected human face image. Specifically, the current human face image may be compared one-by-one with the pre-stored human face images, to determine whether the current human face image matches at least one pre-stored human face image matching human face image, and determine whether the identity information of the target object is legal, wherein the pre-stored human face images may be a human face image or a human face image set of a specified user, may be a human face image set of several users, or a human face image set of all users. Preferably, before performing a human face identification, live body identification may be performed to prevent others from fraudulently using the user's human face information through photos and other items.

Step S106: if legal, obtaining a current expression group of the current human face image.

When the identity of the target object is legal, it is necessary to further obtain the current expression group of the current human face image to complete the corresponding operation based on the current expression group. Specifically, one may first compare the current human face image with each pre-stored human face image in the pre-stored human face image list one-by-one to obtain a similarity value between the current human face and each pre-stored human face image, and determine the target human face image corresponding to the current human face image based on the similarity value.

Then the current expression group corresponding to the current human face image is obtained through the target human face image, wherein a similarity threshold value may be pre-set, and when the similarity value is greater than the pre-set similarity threshold value, the target human face image may be determined.

Step S108: determining an instruction to be executed corresponding to the current expression group.

Specifically, the instruction to be executed corresponding to the expression group may be searched in a pre-established instruction database; the corresponding relationships between the expression groups and the instructions to be executed are stored in the instruction database; wherein the instruction to be executed includes at least the authentication pass instruction, payment instructions and/or alarm instruction. In practical applications, the authentication pass instruction may be an identity authentication completion instruction, or an electronic device permission opening instruction etc.; payment instruction may include multiple payment instructions, each payment instruction corresponds to a payment amount, and different types of payment instruction correspond to different expression groups. The payment amount may be specifically divided into: small amount, large amount and over-large amount etc.; The alarm instruction include a variety of alarm instructions, each alarm instruction corresponds to an alarm method, and different types of alarm instructions correspond to different expression groups. The alarm method may be divided into frozen fund account and contact police, false transfer and contact police, real transfer and contact police etc. By setting the expression group corresponding to the alarm instruction, the alarm operation may be carried out without alarming illegal personnel, effectively protecting the personal safety and property safety of users. The expression group of the target object may be determined based on the corresponding relationship of the key point position difference, and the expression group information may be input into the pre-established instruction database, and the instruction to be executed corresponding to the expression group may be found.

Step S110: performing an operation corresponding to the instruction to be executed.

For example, when the instruction to be executed is an authenticated instruction, the operation corresponding to the authenticated instruction is a permission opening operation. Specifically, the permission opening operation may include allowing the user to specify an interface and allowing the user to use a specific function of the electronic device etc.; when the instruction to be executed is a large-amount payment instruction, the corresponding operation may be a transaction operation such as permitting small-amount transfer or small-amount deposit and withdrawal; when the instruction to be executed is a short message alarm instruction, the corresponding operation may be an electronic device sending a short message alarm message to an associated terminal.

The embodiment of the application provides an operation determination method based on expression groups, which may obtain a human face image of a target object, and perform face human identification on the target object based on the human face image, and then determine whether the identity of the target object is legal. If it is legal, the current expression group corresponding to the current human face image is obtained, and then the instruction to be executed corresponding to the current expression group of the obtained target object is determined, and the operation corresponding to the instruction to be executed is executed. This method of determining the corresponding instruction to be executed based on the facial expression characteristics and executing the corresponding instruction operation may better improve the security and reliability of the electronic device to determine the operation, and effectively prevent criminals from stealing passwords and bringing economic losses to legitimate users. In addition, using human face identification technology, while continuing the identity authentication function of human face identification, with addition of user-defined facial expressions, may ensure that a user will not display these actions in unconscious states such as work, sleep or coma etc., which greatly protects the safety of the user's face.

For ease of understanding, a specific implementation is proposed as follows:
(1) When user A registers, the electronic device may instruct user A to make different custom expressions, so as to collect human face images with different custom expressions presented by user A through the camera; user A may set by own self the corresponding relationship of the expression characteristics and instruction to be executed, for example, the expression with left and right eyes opened corresponds to the instructions to be executed for logging into the account, and the expression with closed eyes and frowns corresponds to the instruction to be executed for a small amount transfer; the expression of opening the mouth and closing the left eye corresponds to the pending instruction of a short message alarm. In specific implementations, when collecting the user's human face image, the electronic device sets key points on the facial contours, eyebrows, eyes, nose, or mouth etc. of the human face. Specifically, the number and positions of key points preferably reflect the facial expression characteristics of the user. For example, the eye feature points include at least mark points of the inner and outer corners and the upper and lower ends of the eye, and the center of the eyeball etc. The eyebrow feature points include at least three mark points of the two ends and middle position of the eyebrow. The nose feature points include at least mark points of the upper end, the lower left and right ends, and the nose protruding points etc., and the mouth includes at least mark points of the up, down, left, and right four points of upper lip and up, down, left, and right four points of the lower lip. The user's expression group may be determined through the above expression features.
   The electronic device may record the instructions to be executed corresponding to the expression groups set by the user, thereby establishing an instruction database, and storing the corresponding relationships between the expression groups and the instructions to be executed.
(2) When user A makes specific expressions in front of the image acquisition device, such as an expression with left eyes closed and right eyes closed, an expression with closed eyes and frowning, or an expression with mouth open and left eyes closed, the electronic device collects user A's current human face image through the camera. The current human face image is compared with each pre-stored human face image in the pre-stored human face image list. The target human face image corresponding to user A is determined, and the expression group of the human face image is determined based on the target human face image.
(3) Search the pre-established instruction database for the instruction to be executed corresponding to the current expression group of user A, and perform the operation corresponding to the instruction, such as if it is determined that the expression group of user A is open mouth and closed left eye, then It may be determined through the instruction database that user A has issued a instruction to be executed for short message alarm, so that corresponding operations may be performed to send a short message alert to the associated terminal set by user A in advance.

In addition, considering that the human face image will be affected by various factors such as the acquisition angle, lighting environment and facial muscle control differences etc., and that these effects will cause different acquisition results of the same facial expression, the same facial expression may be included in the same expression group, and the instruction to be executed is determined by the expression group, thereby reducing the influence of the above factors on the determination of the instruction to be executed. For example, for the factor of the acquisition angle, the position of the acquisition device may be too high, too low, leaning left or leaning right etc., which may lead to acquisition effects such as head down, head up, right-turned head, or left-turned head. For example, with regard to the factor of the difference in facial muscle control, it may happen that when the user is making an open mouth expression, the size of the mouth opening is different due to the different strength of the mouth opening. In addition, it is affected by the acquisition angle, which further affects the acquisition effect of opening the mouth. Therefore, for the same facial expression, at least one face image is acquired and included in the same expression group to improve the accuracy of determining the instructions to be executed. Preferably, when the human face image is classified into the corresponding expression group, it should be determined whether the expression feature is similar to the human face expressions of other expression groups of the user, so as to prevent wrong determination of the expression group due to similar facial expressions, to further improve the accuracy and safety of determining the instructions to be executed.

The method of determining the instructions to be executed through the expression group may prevent criminals from stealing the account password of the legitimate user to manipulate the electronic device, and causing losses to the legitimate user. Moreover, the method that legitimate users send instructions through expression method is also difficult for criminals to detect. For example, when criminals coerce a legitimate user to transfer money on an ATM, the legitimate user may make an alarm expression, which may secretly cause the ATM to send a short message or the contact police through background network, thereby protecting the safety of own property.

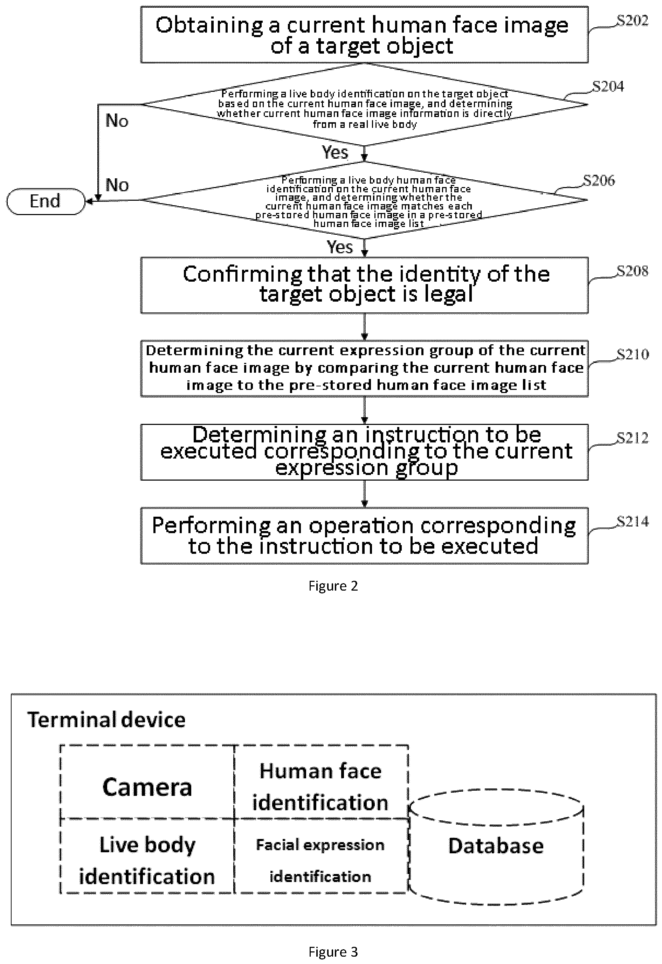

For ease of understanding, a specific implementation of another operation determination method based on expression groups provided by this embodiment is given below. Referring to the flow chart of another operation determination method based on expression groups shown in Figure 2, the method comprises the following steps:
Step S202: obtaining a current human face image of a target object.

In a specific embodiment, the human face image of the target object is collected by a camera, and the camera of the image acquisition device is within a pre-set distance area from the target face. Within the pre-set distance area, the image acquisition effect of the camera is better, which better assist image acquisition.

Step S204: performing a live body identification on the target object based on the current human face image, and determining whether current human face image information is directly from a real live body. If yes, go to step S206; if no, end.

Through live body identification, it may further prevent others from fraudulently using the identity information of the target object.

Step S206: when the current human face image information is directly from a real live body, performing a live body human face identification on the current human face image, and determining whether the current human face image matches each pre-stored human face image in a pre-stored human face image list; If yes, go to step S208; if no, end.

In one embodiment, reference human face images may be stored in advance. After the human face image of the target object is obtained, the human face image of the target object is matched with each reference human face image. If a reference human face image corresponding to the target object is matched, it may be determined that the identity of the target object is legal.

Step S208: confirming that the identity of the target object is legal.

Step S210: determining the current expression group of the current human face image by comparing the current human face image to the pre-stored human face image list.

Specifically, the first expression feature model of the current human face image and the second expression feature model corresponding to each pre-stored human face image in the pre-stored human face image list may be obtained separately, and then the first expression model and each second expression feature model may be compared to obtain the similarity value between the current human face image and each pre-stored human face image, and then determine the target human face image corresponding to the current human face image based on the similarity value, and then obtain the user account corresponding to the target human face image to determine the current expression group corresponding to the current human face image. Through the current expression group, the instruction to be executed may be determined.

By determining the expression group corresponding to the current human face image, it may effectively alleviate the problem of failure to confirm the instructions to be executed due to the different collection angles of the current human face image. Assuming that the target object needs to perform a payment operation, when the current human face image of the target object is collected, there are certain differences in the angles collected each time, so through the above method of determining the current expression group, the current human face images from all angles of the facial expression of the same payment operation is determined as the current facial expression group corresponding to the payment operation. By increasing the number of pre-stored face images from different angles for determining the current expression group, the accuracy of determining the current expression group may be effectively improved.

In order to facilitate the understanding of the method provided in the foregoing embodiment, the embodiment of the present application also provides a method for obtaining the first expression feature model corresponding to the current human face image; and a method for obtaining a second expression feature model corresponding to each pre-stored human face image in the pre-stored face image list, the method comprises the following steps:
(1) determining a first position coordinate set of a plurality of key facial feature points on the current human face image according to the current human face image.
   Firstly, multiple pre-set key points are determined, and these pre-set key points are used as facial key feature points, and then the position coordinates of the multiple facial key feature points on the current human face image are determined to obtain the first position coordinate set.
   Specifically, the pre-set key points are preferably set to some representative feature points of the face, specific examples are: eye feature points, lip feature points, nose feature points, and eyebrow feature points etc.; wherein the number of feature points selected for each part may be flexibly set, and the number of feature points selected may ultimately reflect the overall characteristics of the face. Through the first position coordinate set, the first expression feature model of the current human face image may be determined. For example, reading the position coordinate information of the lip feature points in the current human face image, reading the position coordinate information of the eye feature points in the current human face image, and combining the position coordinate information of the above lip feature points and the eye feature points to determine the first position coordinate set. Of course, the above are only examples of lip feature points and eye feature points. In practical applications, all pre-set key points of the face may be compared and analyzed one by one.
(2) using the first position coordinate set as the first expression feature model corresponding to the current human face image.
(3) according to each second position coordinate set of a plurality of facial key feature points of each pre-stored human face image in the pre-stored human face image list.
   Specifically, the above-mentioned method for determining the first position coordinate set may be used to determine each second position coordinate set.
(4) each second position coordinate set is used as a second expression feature model corresponding to each pre-stored human face image in the pre-stored face image list.

In addition, with the continuous development of deep learning neural networks and other technologies, deep learning neural networks may also be used to train and recognize expression features. Specifically, the current face image is input to the pre-trained facial expression identification neural network, and then the first facial expression feature model corresponding to the current facial image is identified through the facial expression identification model. In addition, each pre-stored human face image in the pre-stored human face image list needs to be input to the facial expression identification neural network to obtain the second expression feature model corresponding to each pre-stored human face image. The neural network model is trained through the training data, and then the facial expression identification neural network that may recognize the facial expression feature model is obtained. Identifying the expression feature model through deep learning may further improve the accuracy of determining the expression feature model.

Step S212: determining an instruction to be executed corresponding to the current expression group.

Through the pre-established instruction database, find the instructions to be executed corresponding to the current expression group. The corresponding relationship between the expression group and the instruction to be executed is stored in the instruction database.

Step S214: performing an operation corresponding to the instruction to be executed.

In the above-mentioned method proposed in the embodiments of the present application, the electronic device performs face identification on the collected user's human face image, and confirms the current human face image and the expression feature model corresponding to the pre-stored face image in a variety of ways, and determines the target human face image corresponding to the current human face image by comparing each expression feature model, and then determines the current expression group, and determines the current expression group of the target object and its corresponding instruction to be executed, so as to perform operations corresponding to the instruction to be executed. In this way, by determining the expression of the user's current human face image and determining the current expression group corresponding to the user, the safety and reliability of the operation determination of the electronic device may be better improved.

In an implementation manner, the above-mentioned operation method based on expression groups may be completed by a terminal device. Specifically, an embodiment of the present application also provides an illustrative structural diagram of a terminal device. As shown in Figure 3, the terminal device may be a personal device or chip such as a mobile phone or a computer. The terminal device comprises a camera, a face identification module, a live body identification module and an expression identification module, and a database configured to store the user's reference human face image and a specific human face image list. The user's current face image is collected through the camera, and the face identification module performs face identification on the user's current human face image; the live body identification module performs live body identification on whether the user's current face image is directly from a real live body; the facial expression identification module recognizes the facial expression features in the user's current facial image. It is worth noting that the order of the aforementioned face identification, live body identification and expression identification is not limited. There may be multiple sorting methods, such as human face identification, live body identification and expression identification in sequence, or live body identification, expression identification and human face identification in sequence.

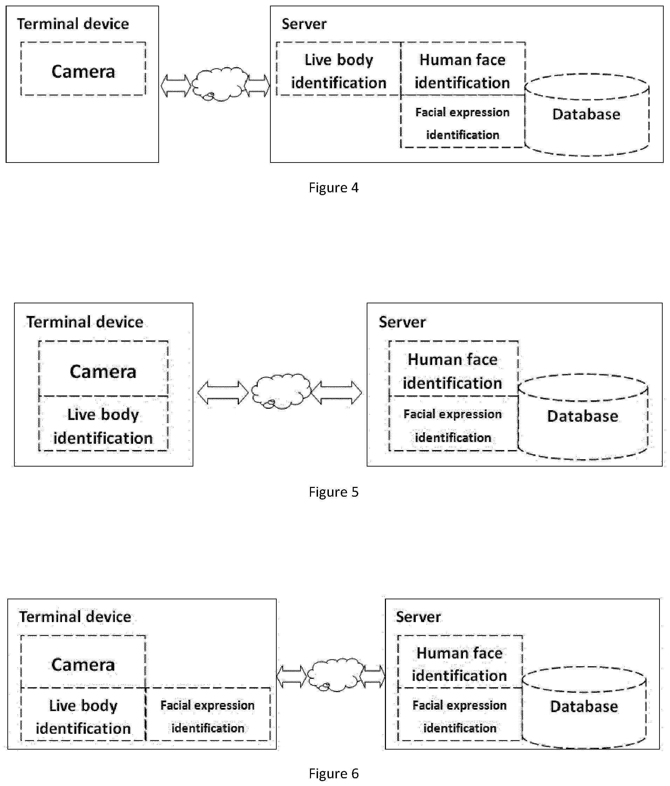

In addition, the terminal device and the server may interact to complete the operation method based on expression groups, wherein the interaction process between the terminal device and the server is not specifically limited. For ease of understanding, the embodiments of the present application provide an interaction process between a terminal device and a server. For example, as shown in Figure 4 is an illustrative structural diagram of an operating device based on expression groups, wherein the terminal device may complete the collection of the user's current human face image through a camera, and send the current human face image to the server. The server completes face identification, expression identification or live body identification based on the database. For example, Figure 5 shows an illustrative structural diagram of another operating device based on expression groups, wherein the terminal device completes the collection of the user's current human face image through a camera, and performs live body identification of the current human face image. When the identification result is that the current human face image is directly from a real live body, the current human face image is sent to the server, and the server completes human face identification and expression identification based on the database. For example, Figure 6 shows an illustrative structural diagram of another operating device based on expression groups, wherein the terminal device completes the collection of the user's current human face image through a camera, performs live body identification of the current human face image, and also performs the initial identification of the user's facial features; then the facial expression feature identification result and the current human face image are sent to the server, and the server completes human face identification based on the database, and further determine the expression characteristics corresponding to the current human face image through expression identification. Among them, the above-mentioned terminal device may be a mobile phone, a computer, a self-service terminal or an ATM machine etc.

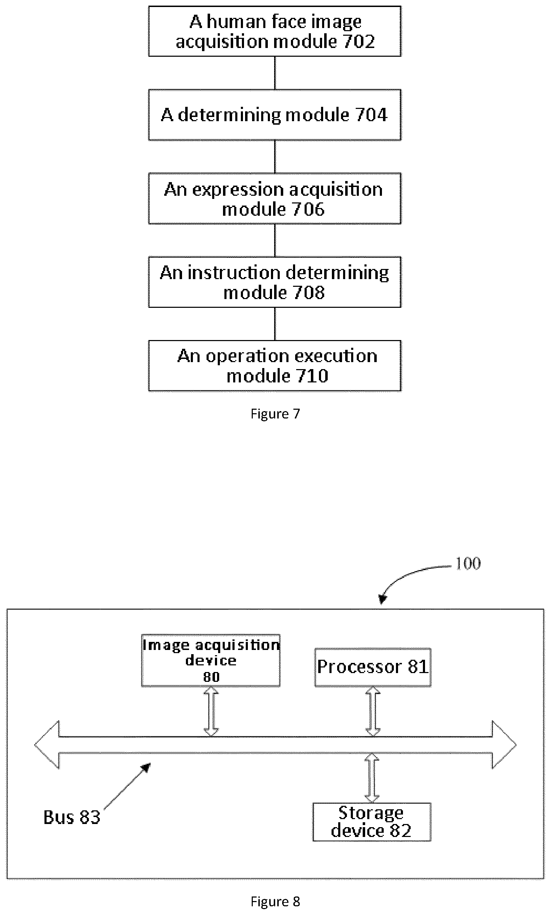

The embodiment of the present application provides an apparatus for operation determination based on expression groups. Referring to Figure 7 which shows a structural block diagram of an apparatus for operation determination operation based on expression groups, the apparatus comprises the following parts:
A human face image acquisition module 702 configured to obtain a current human face image of a target object.

A determination module 704 configured to perform a live body human face identification on the target object based on the current human face image, and determine whether an identity of the target object is legal according to an identification result.

An expression feature acquisition module 706 configured to obtain a current expression group of the current human face image when the determination result of determination module is yes.

An instruction determining module 708 configured to determine an instruction to be executed corresponding to the current expression group;

An operation execution module 710 configured to perform an operation corresponding to the instruction to be executed.

The embodiment of the present application provides an operation determination apparatus based on expression groups. This method may obtain a current human face image of a target object through a human face image acquisition module, and perform face identification on the target object based on the human face image. A determining module determines whether the identity of the target object is legal. If it is legal, an expression acquisition module obtains the current expression group corresponding to the current human face image, and then uses an instruction determining module to determine the instruction to be executed corresponding to the obtained current expression group of the target object, so that the operation execution module executes the operation corresponding to the instruction to be executed. This method of determining the corresponding instruction to be executed according to the facial expression characteristics and executing the corresponding instruction operation may better improve the safety and reliability of the electronic device to determine operation, and effectively preventing criminals from stealing passwords and bringing economic losses to legitimate users. In addition, using human face identification technology, while continuing the identity authentication function of human face identification, with addition of user-defined facial expressions, may ensure that a user will not display these actions in unconscious states such as work, sleep or coma etc., which greatly protects the safety of the user's face. Those skilled in the art may clearly understand that, for the convenience and conciseness of the description, the specific working process of the device for determining an operation based on expression groups described above may refer to the corresponding process in the foregoing embodiment, and will not be repeated here.

An embodiment of the present application provides an electronic device. Referring to the illustrative structural diagram of an electronic device shown in Figure 8, the electronic device comprises: an image acquisition device 80, a processor 81, a storage device 82, and a bus 83; the image acquisition device 80 comprises a camera; a computer program is stored on the storage device 82, and the computer program executes the method of any one of the foregoing embodiments when the computer program is run by the processor.

Among them, the storage device 82 may include a high-speed random access memory (RAM), and may also include a non-volatile memory, for example, at least one disk memory. The bus 83 may be an ISA bus, a PCI bus, an EISA bus etc. The bus may be divided into address bus, data bus and control bus etc. For ease of presentation, only one bidirectional arrow is used in Figure 8, but it does not mean that there is only one bus or one type of bus.

Among them, the memory 82 is used to store a program, and the processor 81 executes the program after receiving an execution instruction. The method executed by the flow process defined apparatus disclosed in any of the foregoing embodiments of the present application may be applied to the processor 81, or implemented by the processor 81.

The processor 81 may be an integrated circuit chip with signal processing capabilities. In the implementation process, the steps of the foregoing method may be completed by an integrated logic circuit of hardware in the processor 81 or instructions in the form of software. The aforementioned processor 81 may be a general-purpose processor, including a central processing unit (CPU for short), a network processor (NP) etc.; it may also be a digital signal processor (DSP for short), Application Specific Integrated Circuit (ASIC for short), Field-Programmable Gate Array (FPGA) or other programmable logic devices, discrete gates or transistor logic devices, and discrete hardware components. The methods, steps, and logical block diagrams disclosed in the embodiments of the present application may be implemented or executed. The general-purpose processor may be a microprocessor or the processor may also be any conventional processor etc. The steps of the method disclosed in the embodiments of the present application may be directly embodied as being executed by a hardware decoding processor or by a combination of hardware and software modules in the decoding processor. The software module may be located in random access memory, flash memory or read-only memory, programmable read-only memory or electrically erasable programmable memory and registers and other mature storage media in the field. The storage medium is located in the memory 82, and the processor 81 reads the information in the memory 82, and completes the steps of the above method in combination with its hardware.

Those skilled in the art may clearly understand that for the convenience and brevity of the description, the specific working process of the system described above may refer to the corresponding process in the foregoing embodiment, which will not be repeated here.

In the several embodiments provided in this application, it should be understood that the disclosed system, device, and method may be implemented in other ways. The device embodiments described above are merely illustrative. For example, the division of the units is only a logical function division, and there may be other division methods in actual implementation. For another example, multiple units or components may be combined or may be integrated into another system, or some features may be ignored or not implemented. In addition, the displayed or discussed mutual coupling or direct coupling or communication connection may be indirect coupling or communication connection through some communication interfaces, devices or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present application may be integrated into one processing unit, or each unit may exist alone physically, or two or more units may be integrated into one unit.

If the function is implemented in the form of a software functional unit and sold or used as an independent product, it may be stored in a computer readable storage medium. Based on this understanding, the technical solution of the present application essentially or the part that contributes to the existing technology or the part of the technical solution may be embodied in the form of a software product, and the computer software product is stored in a storage medium, including several instructions to make a computer device (which may be a personal computer, a server, or a network device, etc.) execute all or part of the steps of the methods described in the various embodiments of the present application. The aforementioned storage media include: U disk, mobile hard disk, read-only memory (ROM), random access memory (RAM), magnetic disks or optical disks and other media that may store program codes.

In the description of this application, it should be noted that the terms "center", "upper", "lower", "left", "right", "vertical", "horizontal", "inner" and "outer" etc. which indicates orientations or positional relationships are based on the orientations or positional relationships shown in the figures, and is only for the convenience of describing the application and simplifying the description, and does not indicate or imply that the pointed device or element must have a specific orientation or a specific orientation. The structure and operation cannot therefore be understood as a limitation of this application. In addition, the terms "first", "second" and "third" are only used for descriptive purposes, and cannot be understood as indicating or implying relative importance.

Finally, it should be noted that the above-mentioned embodiments are only specific implementations of this application, which are used to illustrate the technical solution of this application, rather than limiting it. The scope of protection of the application is not limited to this, although the application has been described in detail with reference to the foregoing embodiments, and those of ordinary skill in the art should understand that any person skilled in the art familiar with the technical field within the technical scope disclosed in this application may still modify the technical solutions described in the foregoing embodiments or may easily think of changes or equivalently replace some of the technical features. However, these modifications, changes or replacements do not cause the essence of the corresponding technical solutions to deviate from the spirit and scope of the technical solutions of the embodiments of the present application, and should be covered within the protection scope of the present application. Therefore, the protection scope of this application should be subject to the protection scope of the claims.

## Claims

1. An operation determination method based on expression groups, **characterized in that**, the method is executed by an electronic device, the method comprising:
obtaining a current human face image of a target object;
performing a live body human face identification on the target object based on the current human face image, determining whether an identity of the target object is legal according to an identification result; the live body human face identification comprises a live body identification and a human face identification;
if legal, obtaining a current expression group of the current human face image;
determining an instruction to be executed corresponding to the current expression group;
performing an operation corresponding to the instruction to be executed.

2. The method according to claim 1, **characterized in that**, the step of performing the live body human face identification on the target object based on the current human face image comprises:
performing the live body identification on the current human face image, and determining whether current human face image information is directly from a real live body;
when the current human face image information directly comes from a real live body, performing the human face identification on the current human face image, and determining whether the current human face image matches each pre-stored human face image in a pre-stored human face image list;
if yes, confirming that the identity of the target object is legal.

3. The method according to claim 2, **characterized in that**, the step of obtaining the current expression group of the current human face image comprises:
determining the current expression group of the current human face image based on the current human face image and the pre-stored human face image list.

4. The method according to claim 3, **characterized in that**, the step of determining the current expression group of the current human face image based on the current human face image and the pre-stored human face image list comprises:
obtaining a first expression feature model corresponding to the current human face image; and obtaining a second expression feature model corresponding to each pre-stored human face image in the pre-stored human face image list;
comparing the first expression feature model with each of the second expression feature models to determine a similarity value between the current human face image and each pre-stored face image;
determining a target human face image corresponding to the current human face image according to the similarity value;
obtaining a user account corresponding to the target human face image;
determining the current expression group corresponding to the current human face image according to the user account.

5. The method according to claim 4, **characterized in that**, the step of obtaining a first expression feature model corresponding to the current human face image; and obtaining a second expression feature model corresponding to each pre-stored human face image in the pre-stored human face image list comprises:
determining a first position coordinate set of a plurality of key facial feature points on the current human face image according to the current human face image;
using the first position coordinate set as the first expression feature model corresponding to the current human face image;
according to each second position coordinate set of a plurality of facial key feature points of each pre-stored human face image in the pre-stored human face image list;
each second position coordinate set is used as a second expression feature model corresponding to each pre-stored human face image in the pre-stored face image list.

6. The method according to claim 4, **characterized in that**, the step of obtaining a first expression feature model corresponding to the current human face image; and obtaining a second expression feature model corresponding to each pre-stored human face image in the pre-stored human face image list further comprises:
inputting the current human face image to an expression identification neural network, so that the expression feature identification network determines the first expression feature model corresponding to the current human face image;
inputting each human face image in the human face image list to the expression identification neural network, so that the expression identification neural network determines the second expression feature model corresponding to each pre-stored face image in the pre-stored human face image list.

7. The method of claim 4, **characterized in that**, the step of determining the current expression group corresponding to the current human face image according to the user account comprises:
searching for a plurality of expression groups corresponding to the user account in a pre-established group database;
obtaining an expression group corresponding to the current human face image;
determining the expression group corresponding to the current human face image as the current expression group.

8. The method according to claim 1, **characterized in that**, the step of determining an instruction to be executed corresponding to the current expression group comprises:
searching for the instruction to be executed corresponding to the current expression group in a pre-established instruction database; wherein a corresponding relationship between the expression group and the instruction to be executed is stored in the instruction database; the instruction to be executed corresponds to at least one expression group.

9. The method according to claim 8, **characterized in that**, the instruction database comprises at least a pass instruction, a payment instruction and/or an alarm instruction; wherein,
the alarm instruction comprises at least one type of alarm instruction; each type of the alarm instruction corresponds to one type of alarm mode; different types of alarm instruction correspond to different expression groups;
the payment instruction comprises at least one type of payment instruction; each type of payment instruction corresponds to a payment amount; different types of payment instruction correspond to different expression groups.

10. The method of claim 1, **characterized in that**, the method further comprises:
when a user registers, obtaining an user account of the user, and collecting pre-stored human face images of the user;
determining the second facial expression feature model of the pre-stored human face images, storing a corresponding relationship between the user account and the second facial expression feature model; and storing a corresponding relationship between the user account and the pre-stored human face images;
determining the expression group of each human face image based on each second expression feature model;
storing the corresponding relationship between the expression group set by the user and the instruction to be executed.

11. An operation determination apparatus based on expression groups, **characterized in that**, the apparatus is executed by an electronic device, and the apparatus comprises:
a human face image acquisition module configured to obtain a current human face image of a target object;
a live body identification module configured to determine whether current human face image information is directly from a real live body;
a human face identification module configured to perform a live body human face identification on the target object based on the current human face image, and determine whether an identity of the target object is legal according to an identification result;
an expression feature acquisition module configured to obtain a current expression group of the current human face image when the identification result of the human face identification module is that the identity is legal;
an instruction determining module configured to determine an instruction to be executed corresponding to the current expression group;
an operation execution module configured to perform an operation corresponding to the instruction to be executed.

12. An electronic device, **characterized in that**, comprising an image acquisition device, a processor, and a storage device;
the image acquisition device is configured to acquire image information;
a computer program is stored on the storage device, and the computer program executes the method according to any one of claims 1 to 10 when run by the processor.

13. A chip with a program stored on the chip, wherein the program executes the steps of the method according to any one of claims 1 to 10 when the program is run by a processor.
